Europäisches Patentamt

European Patent Office

Office européen des brevets

(19)

(11) EP 0 777 998 B1

(12) EUROPEAN PATENT SPECIFICATION

(45) Date of publication and mention
of the grant of the patent:
**06.02.2002 Bulletin 2002/06**

(51) Int Cl.[7]: **A47L 15/48**, F25B 17/08,
D06F 58/24, B01D 53/26,
F26B 21/08

(21) Application number: **95119422.4**

(22) Date of filing: **09.12.1995**

(54) **Method of saving energy in domestic appliances and appliance with improved energy efficiency**

Verfahren zur Energieeinsparung in Haushaltsgeräten und Gerät mit verbessertem Energiewirkungsgrad

Méthode pour économiser l'énergie dans les appareils domestiques et appareil avec rendement en énergie amélioré

(84) Designated Contracting States:
**AT DE FR GB IT SE**

(43) Date of publication of application:
**11.06.1997 Bulletin 1997/24**

(73) Proprietor: **WHIRLPOOL CORPORATION
Benton Harbor Michigan 49022 (US)**

(72) Inventors:
• **Tarplee, Jennifer, c/o Whirlpool Europe s.r.l.
I-21024 Biandronno (IT)**
• **Sicher, Paolo, c/o Whirlpool Europe s.r.l.
I-21024 Biandronno (IT)**
• **Pannock, Jürgen,c/ o Whirlpool Europe s.r.l.
I-21024 Biandronno (IT)**
• **Civanelli, Claudio, c/o Whirlpool Europe s.r.l.
I-21024 Biandronno (IT)**

(74) Representative: **Guerci, Alessandro
Whirlpool Europe S.r.l. Patent Department Viale
G. Borghi 27
21025 Comerio (VA) (IT)**

(56) References cited:
**EP-A- 0 158 326        WO-A-85/05170
WO-A-88/09466        DE-A- 3 626 887
FR-A- 2 544 842**

• **DATABASE WPI Week 8636 Derwent
Publications Ltd., London, GB; AN 86-234686
XP002001094 & JP-A-61 162 985 (MATSUSHITA
ELEC IND KK) , 23 July 1986**

**Description**

The present invention relates to a domestic appliance having an improved energy efficiency and to a method for saving energy in such domestic appliance. The present invention relates particularly to a method for saving energy in a domestic appliance in which a fluid flow is used. With the term "fluid" we mean whatever gas, vapor, liquid or mixture thereof which is normally present in a domestic appliance and which takes part to the process performed by the appliance. More particularly, the present invention relates to a clothes dryer having an improved energy efficiency.

Improving energy efficiency of conventional clothes dryers, both air-vented and condenser types, continues to be a challenge for the domestic appliance industry. A system for energy recovery in a clothes dryer has been disclosed in DE-A-3626887. This document describes the use of a zeolite as a desiccant; the moist dryer air passes through a fixed bed of zeolite. The zeolite dries the air and due to adsorption, increases the temperature of the air as well. The above known system has several drawbacks: a large amount of zeolite is needed in order to dry a complete laundry load; the zeolite must be dried after each drying cycle; and the fixed bed of zeolite is easily clogged by the suspended particles present in the air flow.

EP-A-0158326 discloses a method for saving energy in a hot-water storage tank in which a heat-transfer fluid is used, said fluid being put in a heat-exchange relationship with one portion of a closed system in which a solid compound may adsorb or desorb a volatile compound, the solid compound being capable of generating heat during adsorption and of desorbing the volatile compound when heated. This method is not used in a domestic appliance; moreover the device for carrying out the method is quite complicated and expensive since it needs circulation means between the closed system and an external heat source.

Object of the present invention is to provide an energy saving method and a domestic appliance which are simple and economical and do not present the above drawbacks.

According to the invention, the fluid is put in a heat-exchange relationship with at least one portion of a closed system in which a solid compound and a volatile compound are contained, the solid compound being capable of adsorbing or desorbing the volatile compound and being capable of generating heat during adsorption and of desorbing the volatile compound when heated, respectively.

With the term "volatile compound" we mean each compound or element which may exist either in liquid or in vapor state.

The closed system according to the invention acts as a heat pump; the resulting heating and cooling effects of the solid compound adsorption heat pump cycle are used in a domestic appliance in order to give time and energy savings, requiring very little space inside the appliance.

Preferably the solid compound is selected in the group consisting of zeolite, alumina, activated carbon and silica gel or mixture thereof. Other materials, generally desiccants or molecular sieves, can be used as well. Among the above materials, zeolite is preferred. Zeolite is a natural substance and is also created industrially in more than 120 different versions. It is primarily used as a substitute for phosphates in the detergent industry. It exists in many forms, including powder and pellets. Zeolite is able to adsorb water vapor and incorporate it into its crystal lattice, at the same time releasing heat. When this occurs in an evacuated closed system such that gases other than water vapor are removed, the water vapor adsorption is so rapid that the water remaining in the evaporator may be cooled below its freezing point due to the removal of its heat of vaporization.

With zeolites, alumina and silica gel the preferred volatile compound is water. With activated carbon methanol or other organic compounds may be used. The choice of the system depends mainly on the average temperature of the fluid flow and of the desired heat of sorption which may vary according to the couple of compounds (solid and volatile). Mixtures of solid compounds and volatile compounds respectively may be used as well.

Preferably the closed system does not contain any gas or vapor which is not condensable (i.e. any gas which does not participate to the adsorption/desorption process). Accordingly, the closed system is preferably under a vacuum.

The present invention is particularly adapted to be applied on a clothes dryer, either a condenser dryer or an air-vented dryer.

Other objects, advantages and novel features of the present invention, as well as details of three illustrated embodiments thereof, will be more fully understood from the following description, with reference to the appended drawings in which:

- Figure 1 is a schematic view of a closed system adsorption process according to the invention,
- Figure 2 is a schematic view of a closed system desorption process,
- Figure 3 is a schematic view of a continuous adsorption system according to the invention,
- Figures 4-5 are schematic views of a condenser dryer according to a first embodiment of the invention, in two different working conditions respectively,
- Figure 6 is a schematic view of a condenser dryer according to a second embodiment of the invention, and

- Figures 7-8 are schematic views of an air-vented dryer according to a third embodiment of the invention, in two different working conditions respectively.

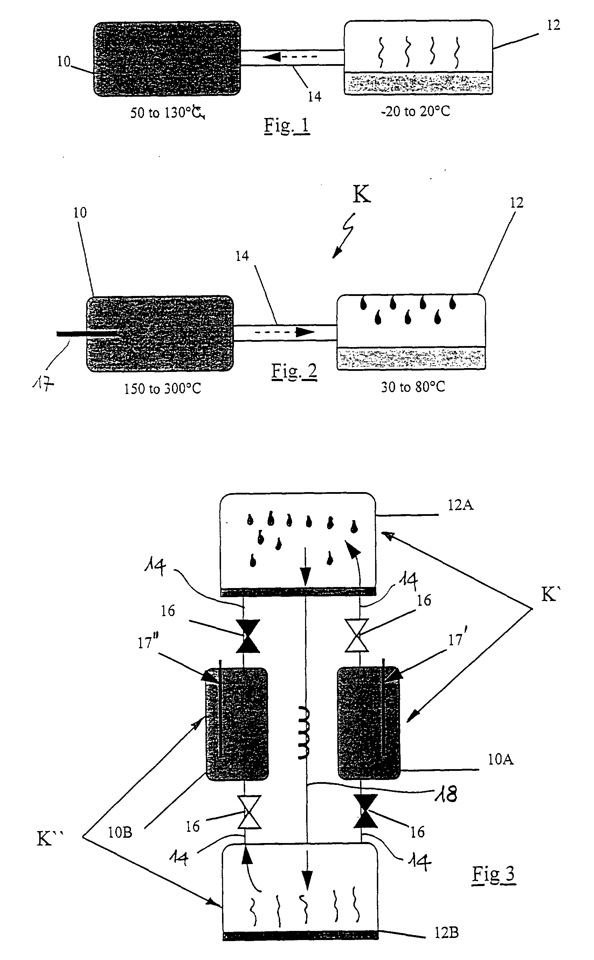

In figures 1 and 2 a zeolite adsorption closed system which can be used on a domestic appliance according to the invention is indicated with the reference K. In its simplest form such system consists of an adsorber/desorber 10 (container shaped), which contains zeolite as the solid adsorbent, and an evaporator/condenser 12, which contains water. The system is placed under a vacuum to remove unwanted non-condensable gases. The cooling and heating processes, due to adsorption and desorption, are inherently cyclic and are illustrated in Figure 1 (adsorption process) and in Figure 2 (desorption process). According to Fig. 1, the zeolite adsorbs water, and consequently cools the evaporator to achieve temperatures of +20°C to -20°C for system pressures of 2500 to 200 Pa. At the same time, the zeolite generates heat to achieve adsorber temperatures of 50°C to 130°C until it is saturated with water at about 30% of its own weight. The adsorption process develops very rapidly, depending largely on the offered passage cross section of a central portion 14 (in the form of a conduit) that connects the water reservoir 12 and the zeolite container 10 rather than the distance between the containers. The process is then reversed during desorption (Fig.2), where the zeolite is heated by an electric heater 17 to remove the water vapor using temperatures of 150°C to 300°C. Other kinds of heat source may be used for heating the zeolite. During the desorption process the temperature of the condenser 12 may vary between 30°C and 80°C. A valve (not shown) separating the two reservoirs 10 and 12 may be used to control the process.

Continuous cooling may be achieved by using two or more systems in tandem. This is illustrated in Figure 3. Valves 16, operated by an automatic control unit (not shown), are used to shift from one working condition to the other. In the drawings the closed valves are indicated in black, and the open valves are indicated in white. In the configuration shown in Figure 3 a first closed system K' is identified, in which an electric heater 17' heats the zeolite contained in the desorber 10a and in which the water condenses in the condenser 12a. Simultaneously, in a second closed system K" a zeolite adsorber 10b adsorbs the water coming from the evaporator 12b (a second electrical heater 17" being off). When the above phases are completed, the black valves 16 are opened, and the white ones are closed. Therefore the zeolite desorber 10a becomes the zeolite adsorber (the electric heater 17' is switched off), and the zeolite adsorber 10b becomes the zeolite desorber. A capillary tube 18 links the condenser 12a with the evaporator 12b. The function of the capillary tube 18 is to provide water to the evaporator 12b at all times. This occurs naturally due to the temperature (and thus pressure) difference between the condenser 12a and the evaporator 12b. The overall energy balance, presuming all the heat output is utilized, is:

100% heat input => 130% heating output + 30 % cooling effect.

The efficiency of the cooling process is only 30%, however, if the heating and cooling effect can both be used, the overall efficiency is 160%. If the 30% heat generated during adsorption is not used, the overall efficiency is 130%.

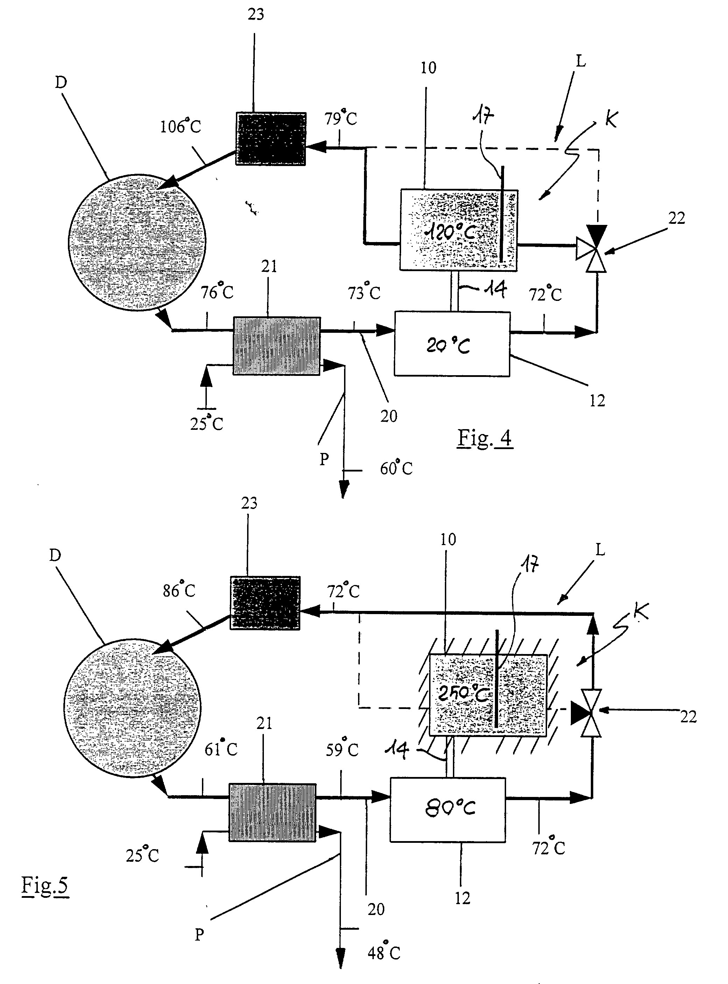

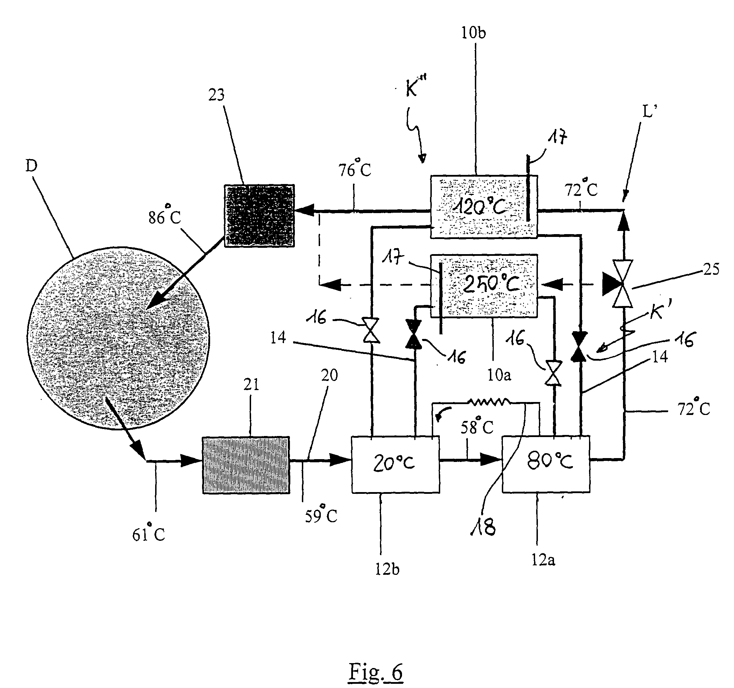

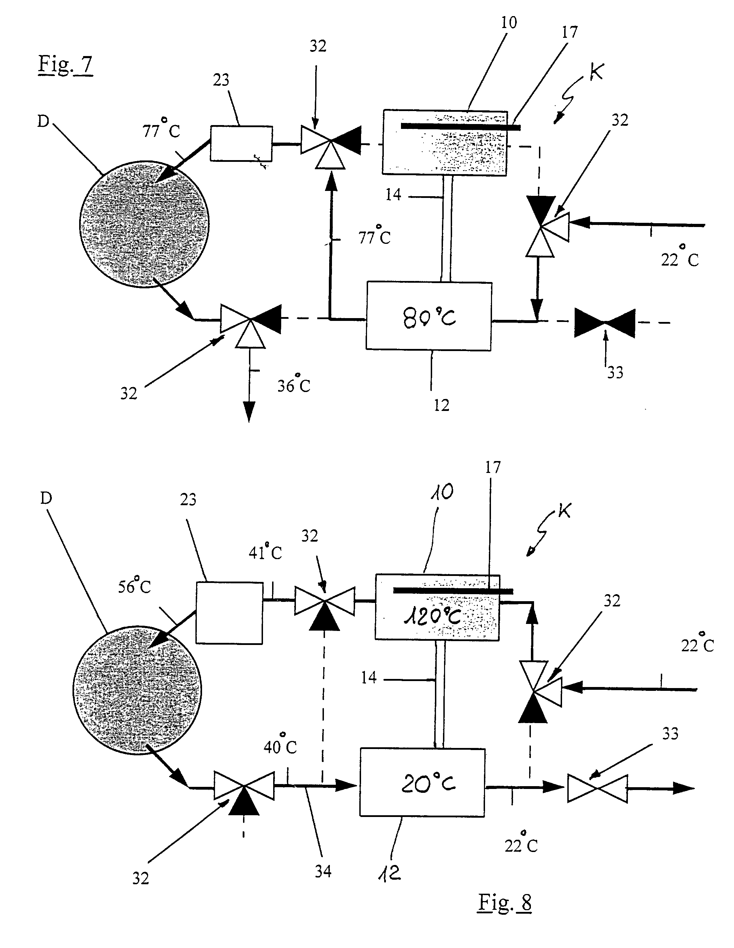

Figures 4-8 describe the use of zeolite adsorption systems in both condenser and air-vented dryers. The system requires only a means of heating the zeolite, it requires no other energy input and contains no moving parts. Three embodiments are disclosed here. The first embodiment (Fig. 4-5) illustrates the use of a single zeolite adsorption system K operating in a cyclic manner for use in condenser dryers. The second embodiment (Fig.6) illustrates the use of a dual zeolite adsorption system operating in a continuous manner for use in condenser dryers. The third embodiment (Fig. 7-8) illustrates the use of a single zeolite adsorption system operating in a cyclic manner for use in air-vented dryers.

With reference to Figures 4-5, a single zeolite adsorption system K is incorporated in a condenser dryer comprising a drum D, with the evaporator/condenser 12 placed in the drum airstream 20 after a conventional air-to-air heat exchanger 21. The coolant airflow path through the heat exchanger 21 is indicated with the reference P. The zeolite adsorber/desorber 10 follows the evaporator/condenser 12, and an air bypass loop L with a 3-way valve 22 is included. In Figures 4-5 example operating temperatures are illustrated. These temperatures, as well as the power values mentioned herebelow, are not to be intended as limiting the scope of the invention, but only as example values. The zeolite system has cyclic operation. During the first phase (Fig. 4) adsorption occurs. The evaporator 12 serves as an additional heat exchanger and causes additional water from the drying cycle air to condense. This causes faster drying due to increased moisture removal from the cycle air. The cycle air then passes to the zeolite adsorber 10 (having its electrical heater 17 not activated), which preheats the air as it moves to a dryer electric heater 23. Due to the preheating of the air via the zeolite adsorber 10, the heater 23 is at a reduced power (2250 W) as compared to a normal condenser dryer cycle. This reduces the energy consumption of the cycle. During the second phase (Fig. 5) desorption occurs. The condenser 12 then serves as a heat exchanger, preheating the air before the electric heater 23. In this case the bypass loop L is activated and the zeolite desorber 10 is no longer in the air path. The valve 22 and the electrical heaters 17 and 23 are operated by a central control unit (not shown) of the appliance. The power of electrical heater 23 is reduced (950 W), but no energy is saved because the zeolite must be heated (electric heater 17 activated, power = 820 W) for the desorption process to occur. The energy balance for this case is:

100% heat input => 130% heating output + 30 % cooling effect.

Adsorption and desorption times are dependent upon the system size, i.e. the amount of zeolite and water. The system may be designed to complete a single or multiple adsorption/desorption cycles during a single drying cycle. Energy and time savings are estimated as 20-25% and 2-15% respectively, for varying system sizes. Other variations of the above embodiment include:

a) the zeolite container may be isolated from the air path during both cycles. In this case the energy balance is:

100% heat input => 100% heating output + 30 % cooling effect.

In this case drying time is reduced, which consequently reduces energy consumption. However, energy savings will not be as pronounced as in the preferred method above;
b) the fan for the cooling air can be turned off during adsorption. In this case, during the adsorption phase the evaporator 12 replaces the conventional heat exchanger 21. In this case there is no time savings, but it gives the benefit that no heat during this phase is exhausted to the ambient.

With reference to Fig. 6, a second embodiment of the invention comprises a dual zeolite adsorption system K' and K" (similar to the system described with reference to Figure 3) which is incorporated in a condenser dryer, with the evaporator 12b and condenser 12a placed in the drum airstream 20, respectively, after the conventional air-to-air heat exchanger 21. A bypass system L' and 3-way valve 25 allows air to then pass over the zeolite adsorber 10b and then to the dryer heater 23. Valve 16 are provided in the central portions 14 of each system in order to shift from one working condition of the closed system to the other and vice versa. The evaporator 12a and the condenser 12b are connected through the capillary tube 18 having the function to provide adequate water flow from the condenser 12a to the evaporator 12b. In Figure 6 also example operating temperatures are illustrated. The zeolite system has continuous operation, so adsorption and desorption occur simultaneously. Thanks to valves 16 (and to an automatic control unit which opens and closes such valves according to a predetermined sequence), the first portions 12a, 12b and the second portions 10a and 10b are shared alternatively by the closed systems K' and K". The evaporator 12b and condenser 12a have always the same function while the portions 10a and 10b of systems K' and K" may become desorber or adsorber respectively. The evaporator 12b serves as an additional heat exchanger and causes additional water from the drying cycle air to condense. The cycle air which has reduced humidity then passes over the condenser 12a and the zeolite adsorber 10b, both of which preheat the air before it passes to the dryer heater 23, which is at a reduced power (650 W) than a normal condenser dryer cycle, thus reducing energy consumption (the total power consumption, with the electrical heater of the zeolite having a power of 850 W is about 1500 W). The total instantaneous energy put into the drying airstream is reduced as compared to a normal condenser dryer cycle, being comparable to that of current gentle cycles. Thus, fabric damage is much reduced. Drying time is somewhat reduced as well. Energy and time savings are estimated as 30-40% and 0-11% respectively, for varying system sizes.
A variation of the above embodiment is to allow the fan (not shown) for the heat exchanger cooling air P to cycle on and off. In this case, the evaporator 12b replaces the conventional heat exchanger 21 (however, it alone will not be sufficient for heat removal and thus the fan must cycle on and off). In this case both time and energy savings are reduced, but it gives the benefit that less heat during off-cycling is exhausted to the ambient.
Figures 7-8 illustrate a third embodiment in which a single zeolite adsorption system K is incorporated in an air-vented dryer. A system of three 3-way valves 32 and one 2-way valve 33 plus bypasses allow for the proper air flow. The zeolite system has cyclic operation. During the first phase (Fig.7) desorption occurs. The condenser 12 serves to preheat the air before the dryer heater 23 (which is off in this phase). However, the zeolite container 10 requires energy input (2,85 kW) and so no energy savings are obtained during this phase. During the second phase (Fig.8) adsorption occurs. The evaporator 12 removes waste heat from the exhaust air 34. This waste heat is then recovered in the zeolite adsorber 10 which serves to preheat the air before the dryer heater 23. The energy input rate for the drying air during this phase is the same as a normal cycle without zeolite adsorption, however the actual energy input (electrical heater 23, P = 0,8 kW) to the system is reduced. Total energy savings are estimated at 16%, with no time savings.
The present invention gives a simple and cost effective means for recovering waste heat from appliances in general and particularly from clothes dryers. It requires no energy input and has no moving parts. Through its implementation in any of the aforementioned embodiments, the invention allows for improved energy efficiency and reduced drying time for domestic clothes dryers.

## Claims

1. Domestic appliance comprising a closed system (K) containing a solid compound and having at least one portion (10, 12) adapted to be put in heat-exchange relationship with a fluid, the solid compound being capable of adsorbing or desorbing a volatile compound and being capable of generating heat during adsorption and of desorbing the volatile compound when heated, **characterised in that** it comprises a rotating drum (D) and an air circuit in which air leaving and entering the drum is flowing, the closed system (K) comprising a first portion (12) adapted to contain the volatile compound and a second portion (10) containing the solid compound and provided with heating means (17), in a first working condition the fluid leaving the drum being adapted to be put in heat-exchange relationship with the above first portion (12) of the system (K) in which the volatile compound is evaporating in order to cool the air flow and then being adapted to be put in heat-exchange relationship with the second portion (10) of the system (K) in which the solid compound is adsorbing the volatile compound in order to heat the air flow, in a second working condition the air flow leaving the drum (D) being adapted to be put in heat-exchange relationship with the first portion (12) of the system (K) in which the volatile compound is condensing, in order to heat the air flow, in such second working condition the heating means (17) being active in order to desorb the volatile compound from the solid compound.

2. Domestic appliance according to claim 1, **characterized in that** the solid compound is selected in the group consisting of zeolite, alumina, activated carbon, silica gel or mixture thereof.

3. Domestic appliance according to claim 1, **characterized in that** the volatile compound is water.

4. Domestic appliance according to any of claims 1-3, **characterized in that** the closed system (K) is under vacuum.

5. Domestic appliance according to claim 1, **characterized in that** it comprises two systems (K', K") having a first portions acting as evaporator (12b) and condenser (12a) respectively, each system having a second portion (10a, 10b) acting alternatively as adsorber or desorber of the volatile compound to or from the solid compound, first valve means (16) being interposed between the first portions (12a, 12b) and the second portions (10a, 10b) in order to shift alternatively from one working condition to the other, and second valve means (25) being provided in the air circuit in order to allow alternatively a heat-exchange relationship between the air flow and one of the second portions (10a, 10b) of the closed systems (K', K"), connection means (18) being interposed between the condenser (12a) and the evaporator (12b) in order to provide adequate flow of volatile compound from the condenser (12a) to the evaporator (12b).

6. Domestic appliance according to claim 5, **characterized in that** it comprises an evaporator (12b) and a condenser (12a) put in heat exchange relationship with the air flow (20) leaving the drum (D), the evaporator (12b) being connected by means of two conduits (14) to two containers (10a, 10b) respectively, the condenser (12a) being connected by means of two conduits (14) to said two containers (10a, 10b) respectively, valve means (16) being put on each of said conduits (14), said two containers (10a, 10b) containing the solid compound and being adapted to be put by means of said valve means (16) alternatively in heat exchange relationship with the air flow before entering the drum (D) or in a condition apart from the air flow, in such last condition heating means (17) being provided in order to heat the solid compound for desorbing the volatile compound.

7. Domestic appliance according to claim 1, particularly air-vented clothes dryer provided with a rotating drum (D), **characterized in that** the closed system (K) comprises a first portion (12) which is adapted to be put in heat-exchange relationship alternatively with the air flow entering the drum (D) and with the air flow leaving the drum (D), in the above first flow condition the first portion (12) of the closed system (K) acting as a condenser in order to heat the air flow, a second portion (10) of the system (K) being adapted to be heated in order to desorb the volatile compound from the solid compound, in the above second flow condition the first portion (12) of the system (K) acting as an evaporator in order to cool the air flow leaving the drum (D) before discharging it to the ambient, and the second portion (10) of the system (K) acting as an adsorber of the volatile compound on the solid compound in order to heat the air flow before entering the drum (D), valve means (32, 33) being provided in order to shift from the first flow condition to the second one and vice versa.

8. Domestic appliance according to any of claims 1-7, **characterized in that** valve means are interposed between the two portions (10, 12) of the closed system (K).

9. Domestic appliance according to any of claims 1-7, **characterized in that** the solid compound is a zeolite and the volatile compound is water.

10. Method for saving energy in a domestic appliance in which a fluid flow is used, such fluid being put in a heat-exchange relationship with at least one portion (10, 10a, 12, 12a) of a closed system (K) in which a solid compound may adsorb or desorb a volatile compound, the solid compound being capable of generating heat during adsorption and of desorbing the volatile compound when heated, **characterised in that** such method is used in a condenser dryer provided with a rotating drum (D) and in which the fluid comprises air and water vapor, in a first working condition the fluid (20) leaving the drum (D) being put in a heat-exchange relationship with a first portion (12) of said closed system (K) in which the volatile compound is evaporating in order to cool the fluid flow, this latter being then put in heat-exchange relationship with a second portion (10) of the system (K) in which the solid compound is adsorbing the volatile compound, in order to heat the fluid flow, and **in that** in a second working condition the fluid flow (20) leaving the drum (D) is put in heat exchange relationship with the first portion (12) of the closed system (K) in which the volatile compound is condensing, in order to heat the fluid flow, in such second working condition the second portion (10) of the closed system (K) being heated in order to desorb the volatile compound from the solid compound.

11. Method according to claim 10, **characterized in that** the above two working conditions are exploited simultaneously in at least two closed systems (K', K"), each system being provided with valve means (16) in order to share alternatively said first portions (12a, 12b), acting as condenser and evaporator, and said second portions (10a, 10b), acting as desorber and adsorber, connection means (18) being interposed between the condenser (12a) and the evaporator (12b) in order to provide adequate flow of volatile compound from the condenser (12a) to the evaporator (12b).

12. Method for saving energy in a domestic appliance in which a fluid flow is used, such fluid being put in a heat-exchange relationship with at least one portion (10, 10a, 12, 12a) of a closed system (K) in which a solid compound may adsorb or desorb a volatile compound, the solid compound being capable of generating heat during adsorption and of desorbing the volatile compound when heated, **characterised in that** such method is used in an air-vented dryer provided with a rotating drum (D) and in which the fluid comprises air and water vapor, in a first working condition the fluid flow before entering the drum (D) being put in heat-exchange relationship with a first portion (12) of the closed system (K) in which the volatile compound is condensing in order to heat the fluid flow, in such working condition a second portion (10) of the closed system (K) being heated in order to desorb the volatile compound from the solid compound, and **in that** in a second working condition the fluid flow before entering the drum (D) is put in heat-exchange relationship with the second portion (10) of the closed system (K) in which the solid compound is adsorbing the volatile compound, in order to heat the fluid flow, the fluid flow leaving the drum (D) being put in heat exchange relationship with the first portion (12) of the system (K) in which the volatile compound is evaporating, in order to cool the fluid flow before discharging it to the ambient.

**Patentansprüche**

1. Haushaltsgerät mit einem geschlossenen System (K), das eine feste Stoffverbindung aufweist und bei dem mindestens ein im geschlossenen System (K) angeordnetes Teil (10, 12) derart ausgebildet ist, dass es in Wärmetauschbeziehung zu einem Fluid steht, wobei die feste Stoffverbindung imstande ist, eine flüchtige Stoffverbindung zu adsorbieren oder zu desorbieren und Wärme während der Adsorption oder Desorption der flüchtigen Stoffverbindung zu erzeugen, wenn diese erwärmt wird,
**dadurch gekennzeichnet,**

dass das Gerät eine Drehtrommel (D) und einen Luftumlauf aufweist, in dem die Drehtrommel verlassende und in diese eintretende Luft strömt, dass das geschlossene System (K) ein erstes Teil (12), das derart ausgebildet ist, dass es die flüchtige Stoffverbindung aufnimmt, und ein die feste Stoffverbindung enthaltendes, zweites Teil (10) aufweist und mit Heizmitteln (17) versehen ist,
dass in einem ersten Betriebszustand das die Drehtrommel verlassende Fluid derart angepasst ist, dass es in Wärmetauschbeziehung zu dem ersten Teil (12) steht, in dem die flüchtige Stoffverbindung verdampft wird, um den Luftstrom zu kühlen, und ferner derart angepasst ist, dass es dann in Wärmetauschbeziehung zu dem zweiten Teil (10) steht, in dem die feste Stoffverbindung die flüchtige Stoffverbindung adsorbiert, um den Luftstrom zu erwärmen, und

**dass** in einem zweiten Betriebszustand das die Drehtrommel verlassende Fluid derart angepasst ist, dass es in Wärmetauschbeziehung zu dem ersten Teil (12) steht, in dem die flüchtige Stoffverbindung kondensiert wird, um den Luftstrom zu erwärmen, wobei in diesem zweiten Betriebszustand die Heizmittel (17) eingeschaltet sind, um die flüchtige Stoffverbindung aus der festen Stoffverbindung zu desorbieren.

2. Haushaltsgerät nach Anspruch 1,
**dadurch gekennzeichnet,**

**dass** die feste Stoffverbindung aus einer Gruppe ausgewählt ist, die Zeolith, Aluminium, Aktivkohle, Kieselgel oder eine Mischung aus diesen Stoffen enthält.

3. Haushaltsgerät nach Anspruch 1,
**dadurch gekennzeichnet,**

**dass** die flüchtige Stoffverbindung Wasser ist.

4. Haushaltsgerät nach einem der Ansprüche 1 bis 3,
**dadurch gekennzeichnet,**
**dass** das geschlossene System (K) unter Vakuum steht.

5. Haushaltsgerät nach Anspruch 1,
**dadurch gekennzeichnet,**

**dass** es zwei Systeme (K', K'') aufweist, die jeweils ein erstes Teil haben, das als Verdampfer (12b) bzw. als Kondensator (12a) arbeitet,

**dass** jedes System ein zweites Teil (10a, 10b) aufweist, das abwechselnd als Adsorber zum Adsorbieren der flüchtigen Stoffverbindung zur festen Stoffverbindung und als Desorber zum Desorbieren der flüchtigen Stoffverbindung aus der festen Stoffverbindung arbeitet,

**dass** erste Ventilmittel (16) zwischen den ersten Teilen (12a, 12b) und den zweiten Teilen (10a, 10b) angeordnet sind, um abwechselnd von dem einen Betriebszustand zu dem anderen Betriebszustand zu gelangen, dass im Luftumlauf angeordnete, zweite Ventilmittel (25) vorgesehen sind, um abwechselnd eine Wärmetauschbeziehung zwischen dem Luftstrom und einem der zweiten Teile (10a, 10b) der geschlossenen Systeme (K', K'') einzugehen,

**dass** Verbindungsmittel (18) zwischen dem Kondensator (12a) und dem Verdampfer (12b) angeordnet sind, um eine ausreichende Strömung der flüchtigen Stoffverbindung vom Kondensator (12a) zum Verdampfer (12b) zu schaffen.

6. Haushaltsgerät nach Anspruch 5,
**dadurch gekennzeichnet,**

**dass** es einen Verdampfer (12b) und einen Kondensator (12a) aufweist, die in Wärmeaustauchbeziehung zu dem die Drehtrommel (D) verlassenden Luftstrom stehen,

**dass** der Verdampfer (12b) mittels zweier Rohrleitungen (14) mit dem einen bzw. dem anderen von zwei Behältern (10a, 10b) verbunden ist, dass der Kondensator (12a) mittels zweier Rohrleitungen (14) mit dem einen bzw. dem anderen der beiden Behälter (10a, 10b) verbunden ist, dass Ventilmittel (16) in jeder Rohrleitung (14) angeordnet sind, und

**dass** die beiden Behälter (10a, 10b) die feste Stoffverbindung enthalten und derart ausgebildet sind, dass sie mittels der Ventilmittel (16) abwechselnd in Wärmeaustauschbeziehung zum Luftstrom stehen, bevor dieser in die Drehtrommel eintritt, oder in einem vom Luftstrom getrennten Zustand sind, in dem Heizmittel (17) vorgesehen sind, um die feste Stoffverbindung zum Desorbieren der flüchtigen Stoffverbindung zu erwärmen.

7. Haushaltsgerät nach Anspruch 1, insbesondere mit Luft belüftete Wäschetrockner, die mit einer Drehtrommel (D) versehen sind,
**dadurch gekennzeichnet,**

**dass** das geschlossene System (K) ein erstes Teil (12) aufweist, das derart ausgebildet ist, dass es in abwechselnder Wärmetauschbeziehung zu dem in die Drehtrommel (D) eintretenden Luftstrom und zu dem die Drehtrommel (D) verlassenden Luftstrom steht,

**dass** im ersten Betriebszustand das erste Teil (12) des geschlossenen Systems (K) als Kondensator arbeitet, um den Luftstrom zu erwärmen, dass ein zweites Teil (10) des Systems (K) derart ausgebildet ist, dass es erwärmt wird, um die flüchtige Stoffverbindung aus der festen Stoffverbindung zu desorbieren,

**dass** im zweiten Betriebszustand das erste Teil (12) des geschlossenen Systems (K) als Verdampfer arbeitet, um den die Drehtrommel (D) verlassenden Luftstrom zu kühlen, bevor er in die Umgebung abgegeben wird, und das zweite Teil (10) des Systems (K) als Adsorber zum Adsorbieren der flüchtigen Stoffverbindung zur festen Stoffverbindung arbeitet, um den Luftstrom zu kühlen, bevor dieser in die Drehtrommel (D) eintritt, und

**dass** Ventilmittel (32, 33) vorgesehen sind, um von dem ersten Betriebszustand zum zweiten Betriebszustand oder umgekehrt zu gelangen.

8. Haushaltsgerät nach einem der Ansprüche 1 bis 7,
**dadurch gekennzeichnet,**
**dass** die Ventilmittel zwischen den beiden Teilen (10, 12) des geschlossenen Systems (K) angeordnet sind.

9. Haushaltsgerät nach einem der Ansprüche 1 bis 7,
**dadurch gekennzeichnet,**
**dass** die feste Stoffverbindung ein Zeolith und die flüchtige Stoffverbindung Wasser ist.

10. Verfahren zur Energieeinsparung in einem Haushaltsgerät, in dem ein Fluidfluss verwendet wird, wobei das Fluid in Wärmetauschbeziehung zu mindestens einem Teil (10, 10a, 12, 12a) eines geschlossenen Systems (K) gebracht wird, wobei ferner eine feste Stoffverbindung eine flüchtige Stoffverbindung adsorbieren oder desorbieren kann und wobei die feste Stoffverbindung imstande ist, Wärme während der Adsorption und der Desorption der flüchtigen Stoffverbindung bei deren Erwärmung zu erzeugen,
**dadurch gekennzeichnet,**

**dass** das Verfahren in einem Kondensatortrockner verwendet wird, der mit einer Drehtrommel (D) versehen ist und in dem das Fluid Luft und Wasserdampf aufweist,

**dass** in einem ersten Betriebszustand das die Drehtrommel (D) verlassende Fluid (20) in Wärmetauschbeziehung zu dem ersten Teil (12) gebracht wird, in dem die flüchtige Stoffverbindung verdampft wird, um den Luftstrom zu kühlen, wobei dieser Luftstrom dann in Wärmtauschbeziehung zu einem zweiten Teil (10) gebracht wird, in dem die feste Stoffverbindung die flüchtige Stoffverbindung adsorbiert, um den Fluidstrom zu erwärmen, und

**dass** in einem zweiten Betriebszustand der die Drehtrommel (D) verlassende Fluidstrom (20) in Wärmetauschbeziehung zu dem ersten Teil (12) gebracht wird, in dem die flüchtige Stoffverbindung kondensiert wird, um den Fluidstrom zu erwärmen, wobei in diesem zweiten Betriebszustand das zweite Teil (10) erwärmt wird, um die flüchtige Stoffverbindung aus der festen Stoffverbindung zu desorbieren.

11. Verfahren nach Anspruch 10,
**dadurch gekennzeichnet,**
**dass** die beiden Betriebszustände gleichzeitig in mindestens zwei geschlossenen Systemen (K', K") geschaffen werden, wobei jedes System mit Ventilmitteln (16) zur Aufteilung auf die als Konsator und Verdampfer arbeitenden, ersten Teile (12a, 12b) und auf die als Desorber und Adsorber arbeitenden, zweiten Teile versehen ist und wobei Verbindungsmittel (18) zwischen dem Kondensator (12a) und dem Verdampfer (12b) angeordnet sind, um einen ausreichenden Strom der flüchtigen Stoffverbindung vom Kondensator (12a) zum Verdampfer (12b) zu schaffen.

12. Verfahren zur Energieeinsparung in einem Haushaltsgerät, in dem ein Fluidstrom verwendet wird, wobei das Fluid in Wärmetauschbeziehung zu mindestens einem Teil (10, 10a, 12, 12a) eines geschlossenen Systems (K) gebracht wird, wobei ferner eine feste Stoffverbindung eine flüchtige Stoffverbindung adsorbieren oder desorbieren kann und wobei die feste Stoffverbindung imstande ist, Wärme während der Adsorption und der Desorption der flüchtigen Stoffverbindung bei deren Erwärmung zu erzeugen,
**dadurch gekennzeichnet,**

**dass** das Verfahren in einem mit Luft belüfteten Trockner verwendet wird, der mit einer Drehtrommel (D) versehen ist und in dem das Fluid Luft und Wasserdampf aufweist,

**dass** in einem ersten Betriebszustand das Fluid, bevor es in die Drehtrommel (D) eintritt, in Wärmetauschbeziehung zu einem im geschlossenen System (K) angeordneten, ersten Teil (12) gebracht wird, in dem die flüchtige Stoffverbindung kondensiert wird, um den Fluidstrom zu erwärmen, wobei in diesem Arbeitszustand ein zweites Teil (10) des geschlossenen Sytems (K) erwärmt wird, um die flüchtige Stoffverbindung aus der festen Stoffverbindung zu desorbieren und

**dass** in einem zweiten Betriebszustand der Fluidstrom, bevor er in die Drehtrommel (D) eintritt, in Wärmetauschbeziehung zu dem im geschlossenen System (K) angeordneten, zweiten Teil (10) gebracht wird, in dem die feste Stoffverbindung die feste Stoffverbindung adsorbiert, um den Fluidstrom zu erwärmen, wobei der die Drehtrommel (D) verlassende Fluidstrom in Wärmetauschbeziehung zu dem im geschlossenen System (K) angeordneten, ersten Teil (12) gebracht wird, in dem die flüchtige Stoffverbindung verdampft, um den Fluidstrom zu kühlen, bevor er an die Umgebung abgegeben wird.

**Revendications**

1. Appareil domestique comprenant un système fermé (K) contenant un composé solide et ayant au moins une portion (10, 12) adaptée à être mise en relation d'échange de chaleur avec un fluide, le composé solide étant capable d'absorber ou de désorber un composé volatil, et étant capable d'engendrer de la chaleur pendant l'adsorption et capable de désorber le composé volatil lorsqu'il est chauffé, **caractérisé en ce qu'**il comprend un tambour rotatif (D) et un circuit d'air dans lequel s'écoule l'air sortant et entrant dans le tambour, le système fermé (K) comprenant une première portion (12) adaptée à contenir le composé volatil et une deuxième portion (10) contenant le composé solide et pourvue de moyens de chauffage (17), dans une première condition de fonctionnement le fluide dans le tambour étant adapté être mis en relation d'échange de chaleur avec la première portion (12) du système (K) dans laquelle le composé volatil s'évapore afin de refroidir l'écoulement d'air, et étant ensuite adapté à être mis en relation d'échange de chaleur avec la deuxième portion (10) du système (K) dans laquelle le composé solide adsorbe le composé volatil afin de chauffer l'écoulement d'air, et dans une deuxième condition de fonctionnement l'écoulement d'air quittant le tambour (D) étant adapté à être mis en relation d'échange de chaleur avec la première portion (12) du système (K) dans laquelle le composé volatil se condense, afin de chauffer l'écoulement d'air, et dans cette deuxième condition de fonctionnement les moyens de chauffage (17) étant actifs afin de désorber le composé volatil depuis le composé solide.

2. Appareil domestique selon la revendication 1, **caractérisé en ce que** le composé solide est choisi dans le groupe comprenant zéolite, alumine, charbon actif, gel de silice, ou leurs mélanges.

3. Appareil domestique selon la revendication 1, **caractérisé en ce que** le composé volatil est de l'eau.

4. Appareil domestique selon l'une quelconque des revendications 1 à 3, **caractérisé en ce que** le système fermé (K) est sous vide.

5. Appareil domestique selon la revendication 1, **caractérisé en ce qu'**il comprend deux systèmes (K', K'') ayant chacun une première portion faisant office d'évaporateur (12b) et de condenseur (12a) respectivement, chaque système ayant une deuxième portion (10a, 10b) faisant office alternativement d'adsorbeur ou de désorbeur du composé volatil vers ou depuis le composé solide, des premiers moyens de valve (16) interposés entre les premières portions (12a, 12b) et les deuxièmes portions (10a, 10b) afin de passer alternativement d'une condition de fonctionnement à l'autre, et des deuxièmes moyens de valve (25) étant prévus dans le circuit d'air afin de permettre alternativement une relation d'échange de chaleur entre l'écoulement d'air et l'une des deuxièmes portions (10a, 10b) des systèmes fermés (K', K''), des moyens de connexion (18) étant interposés entre le condenseur (12a) et l'évaporateur (12b) afin d'assurer un flux adéquat de composé volatil depuis le condenseur (12a) vers l'évaporateur (12b).

6. Appareil domestique selon la revendication 5, **caractérisé en ce qu'**il comprend un évaporateur (12b) et un condenseur (12a) mis en relation d'échange de chaleur avec l'écoulement d'air (20) quittant le tambour (D), l'évaporateur (12b) étant connecté au moyen de deux conduits (14) à deux récipients (10a, 10b) respectivement, le condenseur (12a) étant connecté au moyen de deux conduits (14) auxdits deux récipients (10a, 10b) respectivement, des moyens de valve (16) étant placés sur chacun desdits conduits (14), lesdits deux récipients (10a, 10b) contenant le composé solide et étant adaptés à être mis, à l'aide desdits moyens de valve (16), alternativement en relation d'échange de chaleur avec l'écoulement d'air avant d'entrer dans le tambour (D), ou dans une condition séparée de l'écoulement d'air, et dans cette dernière condition des moyens de chauffage (17) étant prévus afin de chauffer le composé solide pour désorber le composé volatil.

7. Appareil domestique selon la revendication 1, en particulier un sèche-linge à circulation d'air pourvu d'un tambour rotatif (D), **caractérisé en ce que** le système fermé (K) comprend une première portion (12) qui est adaptée à être mise en relation d'échange de chaleur alternativement avec l'écoulement d'air entrant dans le tambour (D) et avec l'écoulement d'air quittant le tambour (D), dans la première condition d'écoulement ci-dessus, la première portion (12) du système fermé (K) faisant office de condenseur afin de chauffer l'écoulement d'air, une deuxième portion (10) du système (K) étant adaptée à être chauffée afin de désorber le composé volatil depuis le composé solide, dans la deuxième condition d'écoulement ci-dessus, la première portion (12) du système (K) faisant office d'évaporateur afin de refroidir l'écoulement d'air quittant le tambour (D) avant de l'évacuer vers l'environnement, et la deuxième portion (10) du système (K) faisant office d'adsorbeur du composé volatil sur le composé solide afin de chauffer l'écoulement d'air avant d'entrer dans le tambour (D), des moyens de valve (32, 33) étant prévus afin de passer de la première condition d'écoulement à la deuxième et vice versa.

8.  Appareil domestique selon l'une quelconque des revendications 1 à 7, **caractérisé en ce que** des moyens de valve sont interposés entre les deux portions (10, 12) du système fermé (K).

9.  Appareil domestique selon l'une quelconque des revendications 1 à 7, **caractérisé en ce que** le composé solide est une zéolite et **en ce que** le composé volatil est de l'eau.

10. Procédé pour économiser l'énergie dans un appareil domestique dans lequel on utilise un écoulement de fluide, ce fluide étant mis dans une relation d'échange de chaleur avec au moins une portion (10, 10a, 12, 12a) d'un système fermé (K) dans lequel un composé solide peut absorber ou désorber un composé volatil, le composé solide étant capable d'engendrer de la chaleur pendant l'adsorption et étant capable de désorber le composé volatil lorsqu'il est chauffé, **caractérisé en ce que** ce procédé est utilisé dans un sécheur-condenseur pourvu d'un tambour rotatif (D), dans lequel le fluide comprend de l'air et de la vapeur d'eau, dans une première condition de fonctionnement le fluide (20) quittant le tambour (D) étant mis en relation d'échange de chaleur avec une première portion (12) dudit système fermé (K) dans lequel le composé volatil s'évapore afin de refroidir l'écoulement de fluide, ce dernier étant mis ensuite en relation d'échange de chaleur avec une deuxième portion (10) du système (K) dans laquelle le composé solide adsorbe le composé volatil, afin de chauffer l'écoulement de fluide, et **en ce que** dans une deuxième condition de fonctionnement l'écoulement de fluide (20) quittant le tambour (D) est mis en relation d'échange de chaleur avec la première portion (12) du système fermé (K) dans laquelle le composé volatil se condense, afin de chauffer l'écoulement de fluide, et dans cette deuxième condition de fonctionnement la deuxième portion (10) du système fermé (K) étant chauffée afin de désorber le composé volatil depuis le composé solide.

11. Procédé selon la revendication 10, **caractérisé en ce que** les deux conditions de fonctionnement ci-dessus sont exploitées simultanément dans au moins deux systèmes fermés (K', K''), chaque système étant pourvu de moyens de valve (16) afin de partager alternativement lesdites premières portions (12a, 12b) faisant office de condenseur et d'évaporateur, et lesdites deuxièmes portions (10a, 10b) faisant office de désorbeur et d'adsorbeur, des moyens de connexion (18) étant interposés entre le condenseur (12a) et l'évaporateur (12b) afin de fournir un écoulement adéquat de composé volatil depuis le condenseur (12a) vers l'évaporateur (12b).

12. Procédé pour économiser l'énergie dans un appareil domestique dans lequel on utilise un écoulement de fluide, ledit fluide étant mis dans une relation d'échange de chaleur avec au moins une portion (10, 10a, 12, 12a) d'un système fermé (K) dans lequel un composé solide peut absorber ou désorber un composé volatil, le composé solide étant capable d'engendrer de la chaleur pendant l'adsorption et étant capable de désorber le composé volatil lorsqu'il est chauffé, **caractérisé en ce que** ce procédé est utilisé dans un séchoir à circulation d'air pourvu d'un tambour rotatif (D) et dans lequel le fluide comprend de l'air et de la vapeur d'eau, dans une première condition de fonctionnement l'écoulement de fluide avant d'entrer dans le tambour (D) étant mis en relation d'échange de chaleur avec une première portion (12) du système fermé (K) dans lequel le composé volatil se condense afin de chauffer l'écoulement de fluide, et dans cette condition de fonctionnement une deuxième portion (10) du système fermé (K) étant chauffée afin de désorber le composé volatil depuis le composé solide, et **en ce que** dans une deuxième condition de fonctionnement l'écoulement de fluide avant d'entrer dans le tambour (D) est mis en relation d'échange de chaleur avec la deuxième portion (10) du système fermé (K) dans laquelle le composé solide adsorbe le composé volatil, afin de chauffer l'écoulement de fluide, l'écoulement de fluide quittant le tambour (D) étant mis en relation d'échange de chaleur avec la première portion (12) du système (K) dans lequel le composé volatil s'évapore, afin de refroidir l'écoulement de fluide avant de l'évacuer vers l'environnement.

Fig. 1

50 to 130°C          14          -20 to 20°C

K

10          14          12

17          150 to 300°C          Fig. 2          30 to 80°C

12A

14          16          17"          17'          K`

10A

10B          K``          16          18          16

14          14          Fig 3

12B

Fig. 4

Fig.5

Fig. 6

Fig. 7

Fig. 8